# EUROPEAN PATENT APPLICATION

(11) **EP 1 095 827 A2**
(43) Date of publication of application: **02.05.2001**
(21) Application number: 00122055.7
(22) Date of filing: 11.10.2000
(51) Int. Cl.: B60R 25/00

(54) **A security system**

(30) Priority: 27.10.1999 GB 9925275
(71) Applicant: Bayerische Motoren Werke Aktiengesellschaft, 80809 München (DE)
(72) Inventor: Kuhls, Burkhard, 81673 München (DE); Talbot, Kevin Trevor, Staffordshire WS13 7JJ (GB)

(57) **Abstract**

A security system suitable for a vehicle 10 is disclosed in which a security controller 12 communicates with one or more remote transponders 14. The security controller 12 includes a memory 16 in which is held recognition information which ties that security controller 12 to that vehicle 10 and the or each remote transponder 14. In the event that the security controller 12 requires replacement, means are provided for copying over the recognition information from the original security controller 12 into a replacement security controller 120.

## Description

This invention relates to security systems and in particular, but not exclusively, to a security system which is suitable for use in a vehicle.

It is known to provide a security system in which a security controller communicates with one or more remote transponders. Some such security controllers include recognition information which ties them to operating only with those particular transponders. If there is a system failure which necessitates replacing the security controller, obtaining a replacement security controller which will operate using the same remote transponders can be a complicated and perhaps lengthy undertaking.

A preferable way in which this might be achieved would be to program a replacement security controller with the same recognition information. So as not to compromise security, the recognition information for such a replacement security controller would not be made easily available. To obtain the recognition information may take some time, e.g. it may necessitate accessing a secure source such as a central database.

In the field of motor vehicle security, this may prove inconvenient. A dealer in a remote territory may have to wait some time for delivery of a replacement security control unit which has been programmed with the recognition information and this might cause their customers some inconvenience.

The problem becomes even more acute with the increasing integration of sub-systems into more centralised vehicle control units. It could prove particularly inconvenient if such a security controller were to be integrated into a central body control module and a fault were to develop in the body control module which was not actually anything to do with the security controller.

It is an object of this invention to provide an improved security system.

Accordingly, the invention provides a security system comprising an original control means which is arranged in use to communicate with one or more remote transponders, said original control means holding recognition information for mutual identification with the or each said transponder, wherein said recognition information can be copied over from said original control means into a replacement control means, such that said replacement control means can be arranged to operate with at least a same one of said one or more transponders.

Prior to the copying over of said recognition information, said original control means may obtain identity information from said replacement control means.

Said recognition information may be copied over into said replacement control means by being formed into a data packet which also includes said identity information, said data packet being transmitted to said replacement control means.

Said data packet may be capable of being transmitted more than once, at least in the event that said recognition information is not properly received by said replacement control means.

Around the formation of said data packet, said original control means may be substantially operationally disabled.

Said replacement control means may be virginised prior to or during the copying over of said recognition information.

A virginisation of said replacement control means may be arranged to ensure that said data packet can be received by only said virginised replacement control means.

Said recognition information may be copied over from said original control means into said replacement control means via a link means.

The security control means may be arranged, through the copying over of said recognition information, not to co-operate with one or more of said transponders.

The invention also provides a vehicle including a security system according to the invention.

The invention will now be described by way of example only and with reference to the accompanying drawings, in which:

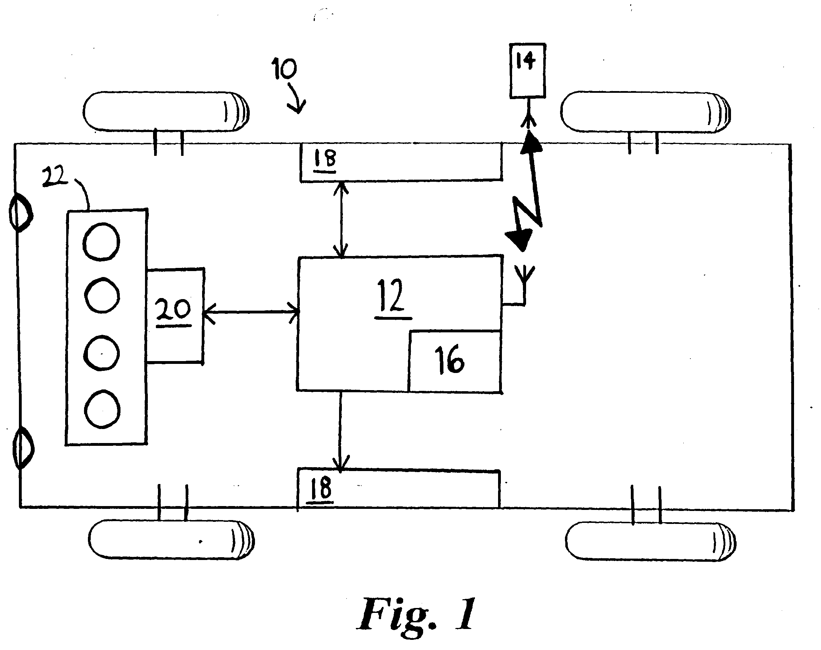

Figure 1 is a schematic diagram of a vehicle including a security system according to the invention; and
Figure 2 shows part of a method of replacing a security control means of the security system of Figure 1.

Referring to the figures, a vehicle 10 includes a security controller 12 which is arranged in use to communicate with one or more remote transponders 14. The security controller 12 includes a memory 16 in which is held recognition information which ties that security controller 12 to the particular vehicle 10 to which it is fitted and which ensures that the security controller 12 will only recognise the or each remote transponder 14 which is intended for use with that vehicle 10. The recognition information may, for example, include the vehicle identification number (VIN) and/or a key code for the or each remote transponder 14.

The security controller 12 influences, in response to communication with the or each authorised remote transponder 14, access to the vehicle 10 through doors 18 and operation of vehicle control systems such as a controller 20 for an engine 22. The security controller 12 may be integrated into a central control module (not shown) of the vehicle 10 which has control over more wide ranging functions.

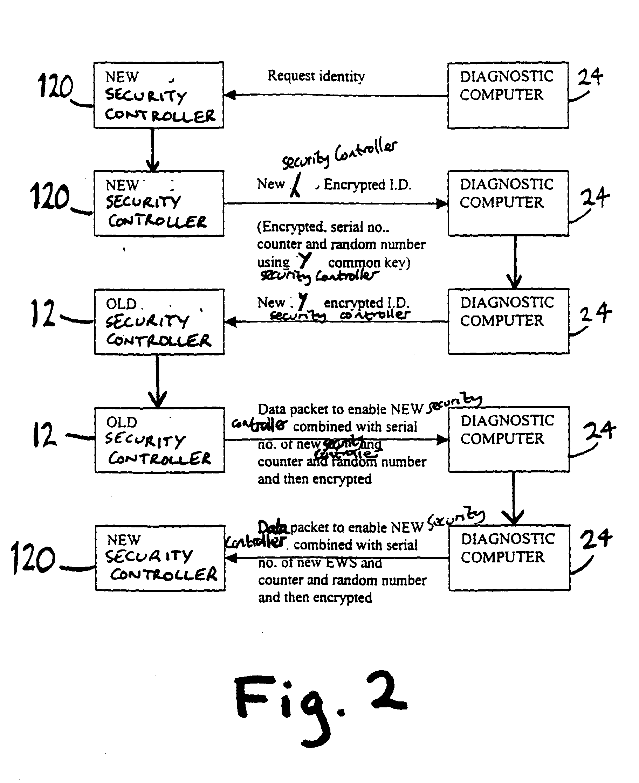

If it becomes necessary to replace the security controller 12, whether as a stand alone unit or as part of a larger module, it also becomes necessary to program a replacement security controller 120 (or a replacement larger module as appropriate) with the recognition information. The present invention provides an arrangement for copying over the recognition information from the originally/currently fitted security controller 12 into a replacement security controller 120 and a preferred way of doing this is described with particular reference to Figure 2.

The new/replacement security controller 120 is supplied in a virginised form, in which it is ready to provide, in response to an authenticated/recognised request, information about its identity. The viginisation sets-up the replacement security controller 120 such that it is ready to receive the recognition information from the old/original security controller 12.

The new security controller 120 is connected to a link means in the form of a diagnostic computer 24, which then requests the identity information (I.D.) from the new security controller 120. When the diagnostic computer 24 and the new security controller 120 achieve mutual authentication, the new security controller 120 sends its identity information (I.D.) to the diagnostic computer 24. The I.D. is sent in an encrypted form and includes the serial number of the new security controller 120 and makes available, using a common key, information related to the position of an internal counter and a random number generator, as set-up by its virginisation. In a variation to the invention, the virginisation of the new security controller 120 could be arranged to take place around the time when the I.D. is transferred.

The diagnostic computer 24 sends the encrypted I.D. of the new security controller 120 to the old/original security controller 12. In response to this, the old security controller 12 forms a data packet which it transmits to the new security controller 120 via the diagnostic computer 24. The data packet contains all the information necessary to enable the new security controller 120 to operate with the or each originally supplied/current remote transponder 14. The data packet contains the recognition information in a form in which it is tied to/combined with the serial number of the new security controller 120 and which will work with its counter and random number root information.

The old security controller 12 prepares the data packet in an EEROM, which reduces the risk of losing the included information should power or communication between the old security controller 12 and the diagnostic computer 24 fail. Because the data packet is retained in the EEROM, the data packet can be re-transmitted more than once, e.g. in the event that the new security controller 120 fails to receive it or if there is a failure to copy over at least the recognition information from the old security controller 12 into the new security controller 120.

The diagnostic computer 24 then transfers the data packet into the new security controller 120 and it 120 can then operate using the or each existing transponder 14. Once successful transfer of the data packet into the new security controller 120 has been achieved, the old security controller 12 can be substantially operationally disabled so that there is no chance of it falling into the wrong hands.

Substantially operationally disabling the old security controller 12 on successfully copying-over the recognition information helps to make sure that the recognition information cannot be copied over into a further security controller or used so as to produce an illegal duplicate transponder.

In a modification to the invention, it would be possible to form the data packet such that the new security controller 120 would work with at least one of the original transponders, but not with at least one other of the original transponders. In this way, if one of the original transponders were to be lost or stolen, the security controller 12 could be replaced without affecting the usefulness of the vehicle 10 to a user who has access to a legitimate original transponder but may be afraid of vehicle theft using a lost/stolen original transponder. This is one case where substantially disabling the old security controller 12 is particularly useful, as after copying over the recognition information, it 12 cannot be substituted later in place of the replacement security controller 120 in an attempt to use a non-authorised original transponder to compromise the security of the vehicle 10.

Supplying an I.D. from the new security controller 120 ensures that the data packet obtained from the old security controller 12 will only work with that particular new security controller 120. In this manner, it becomes significantly more difficult for any wrong-doer to copy the recognition information into a further new security controller in the hope that they might be able to swap that illegal new security controller for the legitimate new security controller 120 and thereby compromise the security of the vehicle 10.

If an security controller needs to have an existing identity cleared, it is only necessary to re-virginise it. This may prove useful, for example, on the second hand market or for re-cycling a serviceable security controller. Once the re-virginisation has been performed, however, it should be noted that a data packet which has already been formed will not copy-over into such a re-virginised security controller. This is because at least the counter number will not match the one incorporated in the identity information. If re-virginisation is carried out, it is necessary to form a new data packet which reflects the new identity information.

While the encryption of the I.D. of the new security controller 120 and of the data packet itself further improves the security of the communications, it should also be noted that still further security is provided because any new security controller 120 will still only work with a, the or each same transponder 14 as the old security controller 12. This is because it 120 will only have had the original recognition information copied-over and will therefore only work with those existing transponders 14 which are still authorised after the replacement. Using the diagnostic computer 24, it would also be possible to authorise replacement or additional transponders while replacing the security controller 12 or selectively to cancel the authorisation of one or more existing transponders 14.

It can thus be seen that the present invention allows local replacement of an original security controller 12 with a new security controller 120 without compromising security and avoids the need for centralised distribution. Thus, a dealer can safety stock replacement security controller 120, whether as stand alone units or as part of larger integrated modules, as he now has the ability to copy over the recognition information substantially directly from one security controller into a replacement security controller.

## Claims

1. A security system comprising an original control means which is arranged in use to communicate with one or more remote transponders, said original control means holding recognition information for mutual identification with the or each said transponder, wherein said recognition information can be copied over from said original control means into a replacement control means, such that said replacement control means can be arranged to operate with at least a same one of said one or more transponders.

2. A security system according to Claim 1, wherein, prior to the copying over of said recognition information, said original control means obtains identity information from said replacement control means.

3. A security system according to Claim 2, wherein said recognition information is copied over into said replacement control means by being formed into a data packet which also includes said identity information, said data packet being transmitted to said replacement control means.

4. A security system according to Claim 3, wherein said data packet can be transmitted more than once, at least in the event that said recognition information is not properly received by said replacement control means.

5. A security system according to Claim 3 or Claim 4, wherein, around the formation of said data packet, said original control means is substantially operationally disabled.

6. A security system according to any preceding claim, wherein said replacement control means is virginised prior to or during the copying over of said recognition information.

7. A security system according to Claim 6, wherein a virginisation of said replacement control means is arranged to ensure that said data packet can be received by only said virginised replacement control means.

8. A security system according to any preceding claim, wherein said recognition information is copied over from said original control means into said replacement control means via a link means.

9. A security system according to any preceding claim, wherein the security control means can be arranged, through the copying over of said recognition information, not to co-operate with one or more of said transponders.

10. A security system substantially as described herein and with reference to the accompanying drawings.

11. A vehicle including a security system according to any preceding claim.
